Europäisches Patentamt

European Patent Office

Office européen des brevets

(11) Publication number: **0 336 963 B1**

(12) **EUROPEAN PATENT SPECIFICATION**

(45) Date of publication of patent specification: **08.12.93** (51) Int. Cl.5: **C08F 12/08**, C08F 6/00

(21) Application number: **87906451.7**

(22) Date of filing: **30.09.87**

(86) International application number:
**PCT/JP87/00721**

(87) International publication number:
**WO 89/02902 (06.04.89 89/08)**

The file contains technical information submitted
after the application was filed and not included in
this specification

(54) **CONTINUOUS METHOD OF TREATING A POLYMER REACTION MIXTURE.**

(43) Date of publication of application:
**18.10.89 Bulletin 89/42**

(45) Publication of the grant of the patent:
**08.12.93 Bulletin 93/49**

(84) Designated Contracting States:
**CH DE FR GB IT LI NL**

(56) References cited:
**JP-A- 5 624 411**
**JP-B- 4 829 797**

**PATENT ABSTRACTS OF JAPAN, vol. 12, no.
28 (C-471)[2875], 27th January 1988**

(73) Proprietor: **MITSUI TOATSU CHEMICALS, Inc.**
**2-5 Kasumigaseki 3-chome**
**Chiyoda-Ku Tokyo 100(JP)**

(72) Inventor: **KOBAYASHI, Nobuki**
**8-2, Toubudai 1-chome**
Mobara-shi Chiba 297(JP)
Inventor: **SHIRAISHI, Yoku**
**911, Shiinazakicho**
**Chiba-shi Chiba 280-02(JP)**
Inventor: **YAMAMOTO, Takashi**
**2785-1, Mutsuno**
**Mobara-shi Chiba 297(JP)**
Inventor: **SHIN, Masaaki**
**1964-5, Shimotsuchidana**
**Fujisawa-shi Kanagawa 252(JP)**

(74) Representative: **Holdcroft, James Gerald, Dr.
et al**
**Graham Watt & Co.,**
**Riverhead**
**Sevenoaks, Kent TN13 2BN (GB)**

EP 0 336 963 B1

**Description**

Background of the Invention

1. Field of the Invention

The present invention relates to a method for separating a styrene polymer useful in the field of electrophotographic toner by continuously treating a reaction mixture containing the styrene polymer prepared by the homopolymerization of styrene monomer or the copolymerization with another vinyl monomer to separate and remove volatile ingredients such as unreacted monomer, polymerization solvent and the decomposition products of the polymerization initiator by the use of a specific separation equipment for the volatile ingredients.

2. Description of the Prior Art

Methods for separating the bulk- or solution-polymerized styrene polymer from a polymerisation reaction mixture have been disclosed in Japanese Patent Publication Nos. 31678/1970, 29797/1973 etc. The styrene polymer described in these publications has a relatively high molecular weight and is useful, for example, in molding applications. These methods have disadvantages and are not suitable for treating the reaction mixture containing the styrene polymer used in this invention.

For example, Japanese Patent Publication No. 29797/1973 discloses a method for using a vertical multitubular heat-exchanger. In the case, however, of applying the heat-exchanger for the reaction mixture of styrene polymer used in this invention, flow rate of the reaction mixture into the heating zone is remarkably increased. This is because the low molecular weight polymer always existing in the aforesaid reaction mixture is foamed by the reduced pressure in the heat exchanger. Therefore the flow line of reaction mixture still maintains its original direction after flowing into the heating zone, and the distribution of flow amount to each tube tends to be uneven in the heating zone. This phenomenon results in variation of flow amount, flow amount distribution and residence time in the heating zone. Consequently the efficiency for removing the volatile ingredients is found to have a remarkable fluctuation and the quality of the product is greatly damaged. It is, of course, possible to homogenize the flow amount distribution to some extent by fitting a dispersion plate at the inlet of heating zone. It, however, is still unsatisfactory as long as the vertical multitubular heat-exchanger is used.

Disclosure of the Invention

The object of this invention is to provide a method for continuously separating a styrene polymer containing a very small amount of a volatile ingredient by homogeneously flowing a reaction mixture of the styrene polymer containing a low molecular weight polymer into a heating zone of a heat-exchanger and removing the volatile ingredient from the reaction mixture under uniform conditions.

The above object of this invention is achieved by providing a continuous method for separating a styrene polymer containing reaction mixture from volatile ingredients by continuously removing said volatile ingredients from the reaction mixture containing the styrene polymer obtained by Polymerizing styrene monomer alone or with another vinyl monomer, which comprises flowing down and preheating the reaction mixture containing said styrene polymer through a circular-ring-shaped space of a heat-exchanger, said heat-exchanger consisting of an outer double pipe as a jacket of circulating heat medium, a concentrically located inner pipe of the heat-exchanger for circulating the heat medium and the circular-ring-shaped space formed in-between, and flashing the reaction mixture containing said styrene polymer into a vacuum chamber connected with said heat-exchanger to continuously separate the styrene polymer from the volatile ingredients, wherein the styrene polymer comprises a low molecular weight polymer having a number average molecular weight of 1,000 - 5,000 and a glass transition temperature of 40 - 80 °C.

Brief Description of the Drawings

Figure 1 is a vertical section illustrating an embodiment of equipment suitable for use in this invention.
Figure 2 is a section along the line A-A' in Figure 1.
In these Figures, 1 is an inlet valve, 2 is the head of a heat-exchanger, 3 is an intermediate flange, 4 is a heat exchange jacket, 5 is a vacuum chamber, 6 is a condenser, 7 is a discharge pump, 8 is a tube in the inner pipe of the heat-exchanger, 9 is the inner pipe of the heat-exchanger, 10 is a circular-ring-shaped space, 11 is the inside wall of the heat-exchanger, 12 is the dispersed fluid, 13 is the outlet fluid, 14 is volatile gas, 15 is the copolymer, 16 is a heat medium inlet to the inner pipe, 17 - 19 is a heat medium flow line in the inner pipe, 20 is the heat medium outlet of the inner pipe, 21 is the heat medium inlet, 22 is the heat medium outlet, 23 is a vacuum chamber jacket, and 24 is the outside wall of the heat-exchanger jacket.

Preferred Embodiments of the Invention

The method of this invention can of course be applied for continuously treating the reaction mixture of styrene polymer polymerized by a batch process and separating the polymer. By combining with such a process that disclosed, for example, in Japanese Patent Laid-open No. 125481/1976, the method of this invention can provide an extremely effective process for continuously preparing the styrene polymer containing a low molecular weight polymer.

The styrene polymer which is used in this invention includes the low molecular weight polymer having a number average molecular weight of 1,000 - 5,000 and a glass transition temperature ranging 40 - 80°C, a styrene polymer obtained by mixing 70 - 30 parts of said above low molecular weight polymer and 30 - 70 parts of a high molecular weight polymer, and a mixture of said above styrene polymer with a low molecular weight polyolefin.

The monomer which constitutes so-called styrene polymer of this invention includes styrene and other vinyl monomer. The examples of other vinyl monomer which may be used include o-methyl styrene, m-methyl styrene, p-methyl styrene, $\alpha$-methyl styrene, p-t-butyl styrene, vinyl naphthalene, vinyl chloride, vinyl fluoride, vinyl acetate, acrylonitrile, methacrylonitrile, acrylamide, methacrylamide, acrylic acid, methacrylic acid, fumaric acid, maleic acid, itaconic acid, methyl acrylate, ethyl acrylate, n-propyl acrylate, i-propyl acrylate, n-butyl acrylate, i-butyl acrylate, cyclohexyl acrylate, 2-ethylhexyl acrylate, stearyl acrylate, methyl methacrylate, ethyl methacrylate, n-propyl methacrylate, i-propyl methacrylate, n-butyl methacrylate, i-butyl methacrylate, cyclohexyl methacrylate, 2-ethylhexyl methacrylate, stearyl methacrylate, dimethyl fumarate, di-i-propyl fumarate, di-n-butyl fumarate, di-i-butyl fumarate, dimethyl maleate, diethyl maleate, di-i-propyl maleate, di-n-butyl maleate, di-i-butyl maleate, 2-vinylpyridine, 2-vinylpyrrole, N-vinylcarbazole, N-vinylindole and N-vinylpyrrolidone. At least one of these monomers can be copolymerized with styrene. In the practice of this invention, styrene alone or a mixture of styrene with methacrylic acid and/or methyl methacrylate is particularly preferred among these vinyl monomers.

Besides in this invention, a homogeneous mixture of polymer can also be prepared effectively by uniformly mixing other high molecular weight styrene polymer with the reaction mixture containing the low molecular weight polymer prior to applying the method of this invention. Furthermore the resulting mixture can also be mixed with at least one of the low molecular weight polyolefins such as low molecular weight polypropylene, polyethylene wax, polytetrafluoroethylene and the like to obtain a uniform mixture.

According to the method of this invention, the volatile ingredients can be continuously removed from the reaction mixture of styrene polymer containing the low molecular weight polymer, which was difficult to perform by the prior art. The volatile content of aforesaid styrene polymer can always be reduced to 0.3% or less without remarkable variation in the efficiency for removing the volatile ingredients. In addition, such a low content of volatile matter in the aforesaid styrene polymer can provide an electrophotographic toner which is excellent in blocking resistance, offset resistance and electrostatic charge and is very valuable in the actual use.

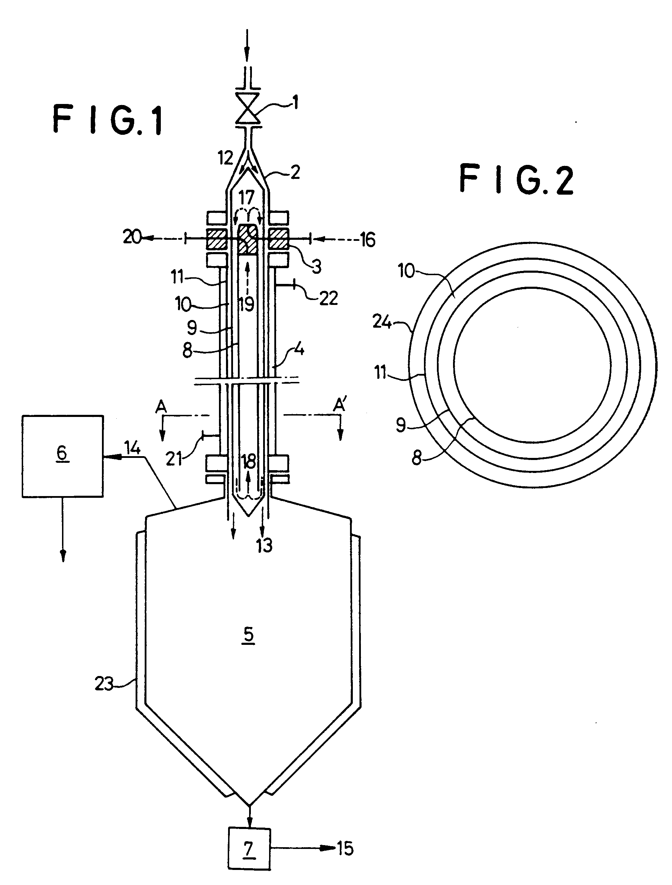

The equipment for separating the volatile ingredients in this invention includes, for example, that illustrated in Figures 1 and 2 which is disclosed in Japanese Patent Laid-open No. 24411/1981. The subject to be treated in this disclosure is a reactive mixture of polymer. The reactive polymer causes a crosslinking reaction by heating in the treatment and generated gel adheres to the pipe. Therefore the object of equipment in above disclosure is to prevent blockage of pipes in the heat-exchanger. On the other hand, the subject of this invention to be treated is a reaction mixture of styrene polymer containing the low molecular weight polymer and causes no gelling reaction when heated. In addition, the object of using this equipment in this invention is to uniformly flow the reaction mixture into the heating zone of the heat-exchanger, remove the volatile ingredients from the reaction mixture under uniform conditions and continuously prepare the low molecular weight styrene polymer having a very low content of the volatile ingredients. As mentioned above, the present invention is quite different from aforesaid disclosure in the subject and object of treatment.

A preferred example for continuously treating the reaction mixture in this invention will be illustrated as follows.

That is, vinyl polymer is formed by a bulk polymerization at 60 - 150°C to a polymerization ratio of 30 - 90% by weight, successively mixed with a solvent to the reduce viscosity of the reaction mixture and a solution polymerization is carried out to obtain the high molecular weight polymer. A styrene type vinyl monomer is separately polymerized at a temperature of 190 - 230°C in a state of solution to obtain the low molecular weight polymer.

A mixture is prepared from 30 - 70 parts by weight of the high molecular weight polymer as solid and 70 - 30 parts by weight of the low molecular weight polymer as solid.

Then the resulting mixture of polymer solution is continuously treated by the method of this invention to separate the volatile ingredients from the styrene polymer. The resulting styrene polymer has a number average molecular weight (Mn) of 2,000 -15,000, a Z average molecular weight (Mz) of not less than 400,000 and Mz/Mn of 50 - 600, and is suitable for the preparation of toner resin.

The present invention will hereinafter be illustrated with respect to examples. Unless otherwise indicated, part means part by weight.

Example 1

A reactor was charged with 70 parts of styrene and 30 parts of 1:1 solvent mixture of xylene and ethyl benzene and maintained at 210°C. Polymerization reaction was conducted by continuously feeding a uniform solution containing 0.5 mole of di-t-butyl peroxide per 100 moles of styrene into the reactor at a rate of 750 cc/hr under the internal pressure of 6 kg/cm$^2$. The resulting reaction mixture containing the low molecular weight polymer was charged at the same rate as above from the outlet of reactor through the inlet valve of volatile matter separation equipment to the circular-ring-shaped space of heat-exchanger. The volatile matter separation equipment is illustrated in Figures 1 and 2. The equipment has an outer double pipe for additional use as a jacket for circulating heat medium, a concentrically located inner pipe of the heat exchanger for circulating the heat medium and a circular-ring-shaped space formed between the outer and inner pipes. The heat medium was circulated in the jacket and inner pipe at 210°C. The temperature was 210°C at the outlet of the reactor and reduced to 190°C at the inside of the heat-exchanger head by the foaming due to reduced pressure and latent heat of vaporization. The reaction mixture was discharged into the vacuum chamber maintained at an absolute pressure of 20 mmHg and a jacket temperature of 140°C. The mixture was separated into gas and liquid phases by flashing and the liquid phase was collected in the bottom of chamber. The low molecular weight polymer had a temperature of 140°C after separating the volatile ingredients. The resulting polystyrene was continuously discharged from the bottom of vacuum chamber and had a number average molecular weight of 2,500, a glass transition temperature of 64°C and a nonvolatile content of 99.9%.

The number average molecular weight was measured in accordance with gel permeation chromatography using polystyrene as standard. The glass transition temperature was measured according to DSC method. The non-volatile content is measured by precisely weighing the sample in a dish, heating it at 105°C for 90 minutes and weighing the residual weight to calculate the loss. The same methods of analyses were also used in the following Examples and Comparative Examples.

Comparative Example 1

The reaction mixture of Example 1 containing the low molecular weight polymer was heated by using a multitubular heat-exchanger having the pipe outlet directly connecting with the vacuum chamber. The flowing down state of the polymer at the outlet of each pipe in the heat-exchanger was observed from the window equipped on the vacuum chamber. The flow rate from each pipe was unstable and the non-volatile content of discharged polystyrene was reduced to 98.9%.

Comparative Example 2

The procedures of Example 1 were repeated by using the same reaction mixture containing the low molecular weight polymer and employing the same heat exchanger having the same area of flow line and the same area of heat transmission except the circulation of heat medium through the inner pipe was omitted (that is, used as a hollow pipe). The non-volatile content of discharged polystyrene was reduced to 99.2%.

Example 2

The reaction mixture of Example 1 containing the low molecular weight polymer was used as the first component. A high molecular weight styrene polymer derived from 70 parts of styrene and 30 parts of n-butyl acrylate and having a weight average molecular weight of 300,000 and a glass transition temperature of 58°C was used as the second component. The first and second components were respectively dissolved in xylene. Both xylene solutions were uniformly mixed in amounts to give a 50:50 weight ratio of the low molecular weight and high molecular weight polymers. Thereafter the same procedures as in Example 1 were carried out by using the same volatile matter separation equipment. The resulting styrene polymer was a homogeneous mixture of the high molecular weight and low molecular weight polymers and had a non-volatile content of 99.8%.

Example 3

The reaction mixture of Example 1 containing the low molecular weight polymer was added with 5% by weight of low molecular weight polypropylene and uniformly mixed. Thereafter the same procedures as in Example 1 was carried out. The low molecular weight styrene polymer obtained was a homogeneous mixture with the low molecular weight polypropylene and had a non-volatile content of 99.9%.

Example 4

Styrene methacrylic acid copolymer was prepared by using the same procedures as in Example 1 except 67 parts of styrene and 3 parts of methacrylic acid was used in place of 70 parts of styrene. The resulting copolymer had a number average molecular weight of 3,800, a glass transition temperature of 70°C, and a non-volatile content of 99.8%.

Example 5

A nitrogen replaced flask was charged with 72 parts of styrene and 28 parts of butyl acrylate as vinyl polymers, and heated to 120°C. Bulk polymerization was conducted for 10 hours at this temperature to obtain a conversion of 55%. Successively 30 parts of xylene were added to prepare a solution. A mixture containing 0.1 part of dibutyl peroxide dissolved in 50 parts of xylene was continuously add to the solution over 8 hours at 130°C. The reaction was continued for an hour after completing the addition. The resulting high molecular weight polymer was named A-1.

In the next step, solution polymerization was conducted by continuously adding a homogeneous solution of 0.5 mole of di-t-butyl peroxide in 100 moles of styrene at a rate of 750 cc/hr to the mixture consisting of 70 parts of styrene and 30 parts of a solvent mixture containing xylene and ethyl benzene. The reaction conditions maintained were an internal reactor temperature of 210°C, the internal pressure of 6 kg/cm$^2$ and an outlet temperature of 100°C.

The resulting low molecular weight styrene polymer had a conversion of 99.5% by weight. The molecular weight was measured in accordance with gel permeation chromatography by using monodispersed standard polystyrene as a reference sample and tetrahydrofuran as an eluent. The number average molecular weight thus obtained was 2,100.

Besides the solid polymer A-2 was obtained by separately removing the solvent and its glass transition temperature (Tg) was measured with a differential scanning calorimeter by using alumina as reference. The Tg measured was 70°C.

A mixture was prepared from 50 parts of above low molecular weight styrene polymer A-2 and 90 parts of the aforesaid high molecular weight polymer A-1 (50 parts as solid). The solvent was removed from the mixture by employing the same volatile matter separation equipment of Example 1 as illustrated in Figures 1 and 2. The mixture was heated to 200°C and flashed into a vacuum system maintained at 10 mmHg by using almost the same conditions as in Example 1. The resulting polymer had Mn of 2,800, Mz of 652,000, Mz/Mn of 233 and Tg of 57°C. In addition the polymer had a residual volatile content of 0.09%.

The styrene polymer thus obtained was evaluated the characteristics for the electrophotographic toner.

(Preparation of the toner)

In a Henshel (RTM) mixer, 100 parts of the resin 10 parts of carbon black (MA-100: a product of Mitsubishi Chemical Co.) as a coloring agent, 3 parts of polypropylene wax and 0.5 - 2 parts of Spiron Black TRH (RTM) as a charge regulator were mixed. The mixture was hot-kneaded with a twin screw extruder at a temperature of 140°C (inlet) - 150°C (outlet), cooled and crushed. The resulting coarse particles were finely ground with a jet mill and subjected to air classification to obtain the toner having a particle size of 8 - 20 $\mu$m (11.5 $\mu$m in average). The resulting toner was mixed with 0.15 part of colloidal silica in Henshel mixer and tested.

The amount of charge controlling agent was controlled to obtain -15 $\mu$C/g of electrostatic charge after mixing 95 parts of the carrier for EP870 with 5 parts of the toner in a V-blender for 30 minutes.

(Evaluation as the Toner)

Furthermore duplication characteristics were measured under the following conditions by Electrophotographic Copying Machine EP870 (a product from Minolta Camera Co.) equipped with Teflon (RTM) hot-rolls.

Fixing ability:

A plastic eraser "MONO" (a product from Tombo Pencil Co.) was gone back and forth 20 times with a constant force between a solid black part and a non-tonered white part on a duplicated sheet. Toner removal from the black part and soil of the white part were observed and divided into the following four classes.

◎        No toner removal at all.
○        Good.
△        Toner was somewhat removed.
X        Poor. Toner was removed and caused much soil.

Contamination of the white background:

The white part of the 100th sheet was compared with that of the 10,000th sheet in a continuous copying operation. The degree of contamination on the white background due to the scattering of toner was divided into the following three classes.

○        Good.
△        Contamination was observed with a magnifying glass having a magnification of 30 times.
X        Contamination was observed with the naked eye.

Offset resistance:

The offset refers to a phenomenon that a part of the toner is attached on the surface of a fixing roll and then transferred again onto the fresh surface of a paper after one rotation of the roll to cause the contamination of the paper.

○        No contamination was found over 10,000 sheets of continuous copying operation.
X        Contamination was found in the same conditions.

Blocking resistance:

Blocking resistance was evaluated by observing the aggregation after allowing the toner to stand for 8 hours at the temperature of 55°C under 80% relative humidity. Results were illustrated by the following four classes.

◎        No aggregation was found at all.
○        Aggregation was found partially but easily unfastened.
△        Firm coagulate was found in part.
X        Firm coagulate was found entirely.

Variation of electrostatic charge:

In the continuous copying operation, tribo-electrostatic charges of the 100th and 10,000th duplicates were expressed by the following ratio (absolute value).

$$\frac{(\text{Amount of charge after 10,000th duplicate}) - (\text{Amount of charge after 100th duplicate})}{(\text{Amount of charge after 100th duplicate})} \times 100(\%)$$

When the ratio was not more than 10(%), the variation was considered good.

Dispersibility of the coloring agent:

A slide glass was put on a hot plate previously heated at 250 - 300°C and a small amount of the toner was placed on the slide glass. A cover glass was put on the toner sample simultaneously with the fusion of the toner and pressed with a given pressure for 60 seconds. The sample was taken out of the hot plate and allowed to cool. The dispersion of coloring agent was observed with an optical transmission microscope having a magnification of 400 - 1,000 times.

The results of the observation was divided into the following two classes.

O      No undispersed or aggregated particles of the coloring agent were found in any field of vision.

X      Many undispersed or aggregated particles of the coloring agent were found.

Reproducibility of the completely solid black part:

Irregular gloss of the solid black part was observed on the 100th duplicate from the start of copying operation. The results were divided into the following three classes.

O      Irregular gloss was slight.

△      Irregular gloss was found in some degree.

X      Irregular gloss was remarkable.

| (Evaluation results as toner) | |
|---|---|
| Fixing ability | ◎ |
| Contamination of the white background | O |
| Offset resistance | O |
| Blocking resistance | ◎ |
| Variation of electrostatic charge | 5.2 |
| Dispersibility of the coloring agent | O |

## Claims

1. A continuous method for separating a styrene polymer containing reaction mixture from volatile ingredients by continuously removing said volatile ingredients from the reaction mixture containing the styrene polymer obtained by polymerizing styrene monomer alone or with other vinyl monomer which comprises flowing down and preheating the reaction mixture containing said styrene polymer through a circular-ring-shaped space of a heat-exchanger, said heat-exchanger consisting of an outer double pipe as a jacket of circulating heat medium, a concentrically located inner pipe of the heat-exchanger for circulating the heat medium and the circular-ring-shaped space formed in-between, and flashing the reaction mixture containing said styrene polymer into a vacuum chamber connected with said heat-exchanger to continuously separate the styrene polymer from the volatile ingredients wherein the styrene polymer comprises a low molecular weight polymer having a number average molecular weight of 1,000 - 5,000 and a glass transition temperature of 40 - 80°C.

2. The method as claimed in claim 1, wherein the styrene polymer is obtained by mixing 70 - 30 parts of the low molecular weight polymer of claim 1 and 30 - 70 parts of a high molecular weight polymer.

**3.** The method as claimed in claim 1, wherein the styrene polymer is obtained by blending the mixture of claim 2 and a low molecular weight polyolefin.

**4.** The method as claimed in claim 1 wherein the styrene polymer is obtained by mixing 70 - 30 parts of the low molecular weight polymer of claim 1 and 30 - 70 parts of a high molecular weight polymer, the resulting styrene polymer having a number average molecular weight (Mn) of 2,000 - 15,000, a Z average molecular weight (Mz) of not less than 400,000 and Mz/Mn of 50 - 600.

**Patentansprüche**

**1.** Kontinuierliches Verfahren zur Abtrennung eines ein Styrolpolymeres enthaltenden Reaktionsgemisches von flüchtigen Bestandteilen, indem die flüchtigen Bestandteile kontinuierlich aus dem Reaktionsgemisch entfernt werden, das das Styrolpolymere enthält, das durch Polymerisation von Styrolmonomeren allein oder mit anderen Vinylmonomeren erhalten wurde, wobei das Verfahren das Hinabfließen und Vorwärmen des Reaktionsgemisches, das das Styrolpolymere enthält, durch einen ringförmigen Raum eines Wärmeaustauschers umfaßt, wobei der Wärmeaustauscher aus einem äußeren Doppelrohr als eine Verkleidung des zirkulierenden Wärmemediums, aus einem konzentrisch angeordneten inneren Rohr des Wärmeaustauschers für die Zirkulation des Wärmemediums und aus dem ringförmigen Raum, der dazwischen gebildet wird, besteht, und wobei das Verfahren weiterhin das Abdampfen des Reaktionsgemisches, das das Styrolpolymere enthält, in eine Vakuumkammer, die mit dem Wärmeaustauscher in Verbindung steht, umfaßt, sodaß das Styrolpolymere kontinuierlich von den flüchtigen Bestandteilen abgetrennt wird, wobei das Styrolpolymere ein Polymeres niedrigen Molekulargewichts mit einem Molekulargewicht-Zahlenmittel von 1000 - 5000 und einer Glasumwandlungstemperatur von 40 - 80 °C umfaßt.

**2.** Das Verfahren nach Anspruch 1, wobei das Styrolpolymere erhalten wird, indem 70 - 30 Teile des Polymeren niedrigen Molekulargewichts aus Anspruch 1 und 30 - 70 Teile eines Polymeren hohen Molekulargewichts gemischt werden.

**3.** Das Verfahren nach Anspruch 1, wobei das Styrolpolymere erhalten wird, indem das Gemisch aus Anspruch 2 und ein Polyolefin niedrigen Molekulargewichts gemischt werden.

**4.** Das Verfahren nach Anspruch 1, wobei das Styrolpolymere erhalten wird, indem 70 - 30 Teile des Polymeren niedrigen Molekulargewichts aus Anspruch 1 und 30 - 70 Teile eines Polymeren hohen Molekulargewichts gemischt werden, wobei das resultierende Styrolpolymere ein Molekulargewicht-Zahlenmittel (Mn) von 2000 - 15000, ein durchschnittliches Molekulargewicht Z (Mz) von nicht weniger als 400000 und einen Quotienten Mz/Mn von 50 - 600 aufweist.

**Revendications**

**1.** Procédé en continu pour séparer un mélange réactionnel contenant un polymère de styrène d'avec des ingrédients volatils en éliminant en continu lesdits ingrédients volatils du mélange réactionnel contenant le polymère de styrène obtenu par polymérisation d'un monomère de styrène seul ou avec un autre monomère de vinyle qui comprend les opérations consistant à faire écouler vers le bas et le préchauffage du mélange réactionnel contenant ledit polymère de styrène à travers un espace en forme de tube annulaire d'un échangeur de chaleur, ledit échangeur de chaleur se composant d'un double tuyau externe en tant qu'enveloppe de milieu de chauffage circulant, d'un tuyau interne situé concentriquement dans l'échangeur de chaleur pour la circulation du milieu de chauffage et de l'espace en forme de tube annulaire formé entre les deux, et à détendre brusquement le mélange réactionnel contenant ledit polymère de styrène dans une chambre à vide reliée audit échangeur de chaleur pour séparer en continu le polymère de styrène d'avec les ingrédients volatils, dans lequel le polymère de styrène comprend un polymère à masse moléculaire faible ayant une masse moléculaire moyenne en nombre de 1 000 à 5 000 et une température de transition vitreuse de 40 à 80°C.

**2.** Procédé selon la revendication 1, dans lequel le polymère de styrène est obtenu en mélangeant 70 à 30 parties du polymère à masse moléculaire faible de la revendication 1 et 30 à 70 parties d'un polymère à masse moléculaire élevée.

**3.** Procédé selon la revendication 1, dans lequel le polymère de styrène est obtenu en homogénéisant le mélange de la revendication 2 et une polyoléfine à masse moléculaire faible.

**4.** Procédé selon la revendication 1, dans lequel le polymère de styrène est obtenu en mélangeant 70 à 30 parties du polymère à masse moléculaire faible de la revendication 1 et 30 à 70 parties d'un polymère à masse moléculaire élevée, le polymère de styrène résultant ayant une masse moléculaire moyenne en nombre (Mn) de 2 000 à 15 000, une masse moléculaire moyenne Z (Mz) de 400 000 au moins, et Mz/Mn de 50 à 600.

# F I G.1

# F I G.2